# DEMANDE DE BREVET EUROPEEN

(11) **EP 0 607 087 A1**
(43) Date de publication de la demande: **20.07.1994**
(21) Numéro de dépôt: 94400078.5
(22) Date de dépôt: 11.01.1994
(51) Int. Cl.: A01K 13/00

(54) **Appareil de nettoyage automatique pour chiens ou animaux similaires**

(30) Priorité: 13.01.1993 FR 9300437
(71) Demandeur: Brown, Jacques, F-83580 Gassin (FR)
(72) Inventeur: Brown, Jacques, F-83580 Gassin (FR)
(74) Mandataire: Hautier, Jean-Louis

(57) **Abrégé**

L'invention a pour objet un appareil de nettoyage automatique.

L'enceinte étanche (4) est pourvue d'une arrivée de liquide qui permet d'immerger partiellement l'animal dans un demi-bain de liquide. Le dispositif de projection projette de l'air sous pression par des buses (15) disposées sur toute la surface intérieure (16) de l'enceinte (4) de manière à assurer un brassage et un barbotage du liquide et des poils. L'enceinte est réalisée avec des formes arrondies pour assurer une projection du liquide et de l'air dans tous les sens.

L'invention s'applique au nettoyage notamment des chiens.

## Description

L'invention a pour objet un appareil de nettoyage automatique pour chiens ou animaux similaires.

Cet appareil de nettoyage est entièrement automatique y compris pour le rinçage et le séchage.

Cet appareil peut être utilisé au domicile mais également en application industrielle et commerciale, par exemple dans les lieux publics avec un monnayeur. Une application spécifiquement vétérinaire peut être prévue.

Enfin, cet appareil est destiné aux chiens et autres animaux similaires tels que les chats, moutons, etc.

Bien entendu, avec quelques adaptations, cet appareil peut être appliqué aux êtres humains.

L'état de la technique peut être défini par les brevets suivants :
- *FR-A-2.038.687* : *Enceinte permettant le nettoyage* ou le *traitement externe des êtres humains et des animaux, caractérisée* *en ce que la housse affectant la forme d'une cloche comporte* au *moins, à une extrémité près de sa partie supérieure, une ouverture* *réglable pour le passage du cou de la personne ou de l'animal,* *tandis que la partie supérieure de la housse cloche comporte* une *dispositif permettant la diffusion de fluides divers tels* *qu'émulsion, eau ou gaz et même de produits pulvérulents, des* *moyens étant également prévus sur les côtés de la housse pour* *assurer l'application correcte du traitement.*
- *FR-A-2.543.795* *: La présente invention a pour objet une* *enceinte facilement démontable et transportable destinée au* *nettoyage hygiénique des animaux de différentes tailles.*

*Nous vous présentons les parties principales de l'appareil :*
- *couvercle bombé ;*
- *quatre parois ;*
- *la paroi s'abaisse pour laisser entrer l'animal ;*
- *six systèmes d'évacuation de buée ;*
- *deux systèmes de poires à douche pouvant arroser l'animal ;*
- *quatre gants permettant le nettoyage de l'animal et un* *système de collier réglable ;*
- *adaptation possible du séchoir ;*
- *pompe pour évacuer l'eau usagée.*
- *EP- 0 034.123 : Appareil de lavage pour chiens et animaux* *similaires comprenant une boîte cylindrique ayant une paroi* *horizontale au fond, une partie qui peut s'ouvrir et permettre* *ainsi à un animal d'entrer et de quitter la boîte et une paroi* *verticale au fond formée d'une ouverture pour la tête d'un animal* *qui se trouve dans la boîte. A l'intérieur de la boîte, se* *trouvent plusieurs ajutages d'arrosage qui diffusent de l'eau ou* *un mélange d'eau et de détergent sous pression par des moyens de* *vaporisation. Une unité centrale de programmation et de contrôle* *contrôle, conformément à un cycle de lavage opérationnel pré-* *déterminé, les moyens de vaporisation et les moyens qui évacuent* *hors de la boîte, l'eau du mélange fournie par les ajutages* *d'arrosage.*
- *EP- 0 111.462 : Une machine automatique à laver les chiens* *et autres animaux apparentés comprenant une boîte rigide,* *généralement cylindrique, ayant une paroi horizontale et deux* *extrémités dont l'une a une ouverture pour la tête de l'animal. La boîte, qui, à l'intérieur, contient plusieurs ajutages* *d'arrosage reliés aux moyens de lavage et aux moyens de séchage* *est formée, entre les deux extrémités, par une série axiale* *d'éléments attenants annulaires modulaires reliés ensemble sur* *l'axe, chacun d'eux ayant une double paroi définissant un* *intervalle divisé en une pluralité de premier et deuxième passages* *séparés axiaux, reliés respectivement aux moyens de lavage et aux* *moyens de séchage et communiquant avec les ajutages d'arrosage.*

Certains des brevets cités n'autorisent pas un nettoyage automatique. L'utilisateur doit agir avec les mains pour frotter l'animal par des ouvertures.

D'autres appareils décrivent l'envoi de jets d'eau sous pression, ce qui n'est pas suffisant pour le lavage, étant donné qu'il n'y a aucun brassage des poils mais une simple projection de liquide.

L'invention tend a éviter tous ces problèmes.

Le nettoyage est entièrement automatique. Il y a un véritable brassage de l'eau.

L'appareil, selon l'invention, permettant le nettoyage ou le traitement externe des animaux du type chiens, est réalisé à partir d'un socle de base qui peut recevoir un ou plusieurs panneaux amovibles, de manière à former une enceinte ou caisson étanche à l'exception d'un orifice permettant de laisser passer la tête de l'animal ; des moyens d'étanchéité assure l'étanchéité entre la tête et l'orifice ; un dispositif de projection assure la diffusion de fluides divers et leur évacuation caractérisé par le fait
que l'enceinte étanche est pourvue d'une arrivée de liquide qui permet d'immerger partiellement l'animal dans un demi-bain de liquide,
que le dispositif de projection projette de l'air sous pression par des buses disposées sur toute la surface intérieure de l'enceinte de manière à assurer un brassage et un barbotage du liquide et des poils,
que l'enceinte est réalisée avec des formes arrondies pour assurer une projection du liquide et de l'air dans tous les sens.

Le dispositif de projection est assuré par un moteur électrique alimenté sur secteur et/ou batterie qui assure la soufflerie de l'air pulsé au travers des buses, prévues à cet effet, sur toute la surface intérieure de la paroi du caisson ou enceinte étanche.

Selon un mode de réalisation préféré, l'air est pulsé au travers des doubles parois de l'enceinte qui comportent, sur toute la face intérieure de la paroi intérieure, des orifices ou buses au-dessus ou au-dessous du niveau de liquide du bain.

L'air pulsé est chauffé à une température d'environ 32°.

Le produit liquide est de l'eau à laquelle peut être joints divers adjuvants liquides ou pulvérulents selon les phases du procédé de nettoyage (nettoyage-rinçage-séchage).

Selon un mode de réalisation préféré, le niveau de liquide du bain bouillonnant arrive au niveau du bord inférieur de l'orifice prévu pour laisser sortir la tête de l'animal.

Selon un mode particulier de construction, l'enceinte étanche est disposée sur un coffre technique qui loge l'alimentation électrique, le moteur de propulsion du fluide à travers les doubles parois de l'enceinte, les réserves de produits adjuvants, les raccords, tuyaux d'arrivée et d'évacuation des eaux usées.

Le coffre technique et l'enceinte étanche sont indépendants l'un de l'autre. Le coffre technique peut ainsi recevoir des enceintes étanches de tailles différentes.

Les pièces de raccordement enceinte étanche-coffre technique sont les mêmes.

L'utilisateur peut ainsi acheter un coffre technique et une enceinte étanche adaptée à la taille de son animal. Le fabricant de l'appareil réalisera un coffre technique commun et plusieurs modèles d'enceintes étanches de tailles différentes.

Ledit caisson technique reçoit un socle de base qui a une forme de vasque sur lequel est monté un ou plusieurs panneaux amovibles qui forme la partie restante qui termine l'enceinte étanche.

Les panneaux et le socle de base forment une enceinte ayant une forme arrondie ovoïde, seule la partie en contact avec la base est plane, de manière à faciliter l'appui au sol des pattes de l'animal, tout le restant de la paroi interne de l'enceinte est arrondie (sphérique ou cylindrique) de manière à faciliter le brassage du liquide et/ou des poils par les jets d'air.

Selon un mode de réalisation, l'enceinte étanche est réalisée par une paroi ou panneau longitudinal qui est fixé sur le socle de base, tandis que l'autre paroi ou panneau complémentaire est articulé longitudinalement pour faire office de porte et par le socle de base qui est en forme de vasque.

Cet appareil a des caractéristiques techniques et esthétiques telles qu'il peut être portable.

Les dessins ci-joints sont donnés à titre d'exemples indicatifs et non limitatifs. Ils représentent un mode de réalisation préféré selon l'invention. Ils permettront de comprendre aisément l'invention.

La figure 1 est une vue en perspective vu de côté selon l'axe longitudinal de l'appareil sans animal dans l'appareil.

La figure 2 est une vue en perspective de l'appareil vu par l'avant.

La figure 3 est une vue en perspective de l'appareil vu par l'arrière.

La figure 4 est une vue en perspective de l'appareil vu de dessus.

La figure 5 est une vue selon la figure 1 mais où l'animal est en place.

La figure 6 est une vue selon la figure 5 mais où le panneau articulé faisant office de porte est ouvert.

La figure 7 est une vue en coupe de l'appareil vu selon son axe longitudinal.

La figure 8 est une vue en coupe de l'appareil vu selon son axe transversal par l'arrière, avec le panneau articulé faisant office de porte ouverte.

Il est décrit ci-après un mode de réalisation préféré de construction de l'appareil.

Cet appareil permet le lavage d'un animal, principalement de chien, y compris le rinçage et le séchage, le tout fonctionnant automatiquement.

Pour l'utilisateur, il est suffisant d'avoir une arrivée d'eau et un bac pouvant recevoir et évacuer les eaux usées. Le moteur, qui est une soufflerie, quant à lui, fonctionne de préférence sur batterie rechargeable.

L'appareil selon l'invention est fabriqué dans des matières plastiques appropriées.

Ledit appareil est réalisé à partir d'un socle de base 1 et de plusieurs panneaux 2,3 amovibles de manière à former une enceinte ou caisson étanche 4 à l'exception d'un orifice 5 permettant de laisser passer la tête 6 de l'animal. Des moyens d'étanchéité 7 assurent l'étanchéité entre la tête 6 et l'orifice 5. L'enceinte ou caisson étanche 4 repose sur un coffre technique 8 ; ledit coffre technique 8 comporte un moteur électrique 9, du type ventilateur, de manière à assurer la projection de l'air. Ce coffre ou boîtier technique 8 comporte également des produits de rinçage 10 et lavant 11 ainsi que le dispositif d'alimentation électrique 12 qui peut être une batterie rechargeable avec son embout de raccordement à enrouleur. Entre l'enceinte ou caisson étanche 4 et le boîtier technique 8, il existe un siphon 13 raccordé à un tuyau d'évacuation des eaux usées 14 qui permet, l'évacuation des eaux usées dans la partie basse de l'enceinte 4. L'enceinte ou caisson étanche 4 est pourvue d'une arrivée de liquide 22 qui permet de remplir de liquide l'enceinte ou le caisson étanche 4 à un niveau tel pour que l'animal soit dans un demi-bain, par exemple au deux tiers de sa hauteur. Le dispositif de projection, assuré par le moteur 9, projette de l'air sous pression par des buses ou orifices 15 disposées sur toute la surface intérieure 16 de l'enceinte ou caisson étanche 4 et ce, de manière à assurer un brassage et un barbotage du liquide.

En effet, la projection d'air pulsé se fait aussi bien sous le niveau d'eau du bain mais également au-dessus du niveau d'eau 19.

L'air ambiant peut être remplacé par un autre gaz adéquat sous pression.

Cet air soufflé par le moteur 9 est de l'air chaud, par exemple à 32°, de manière à ne pas refroidir l'animal.

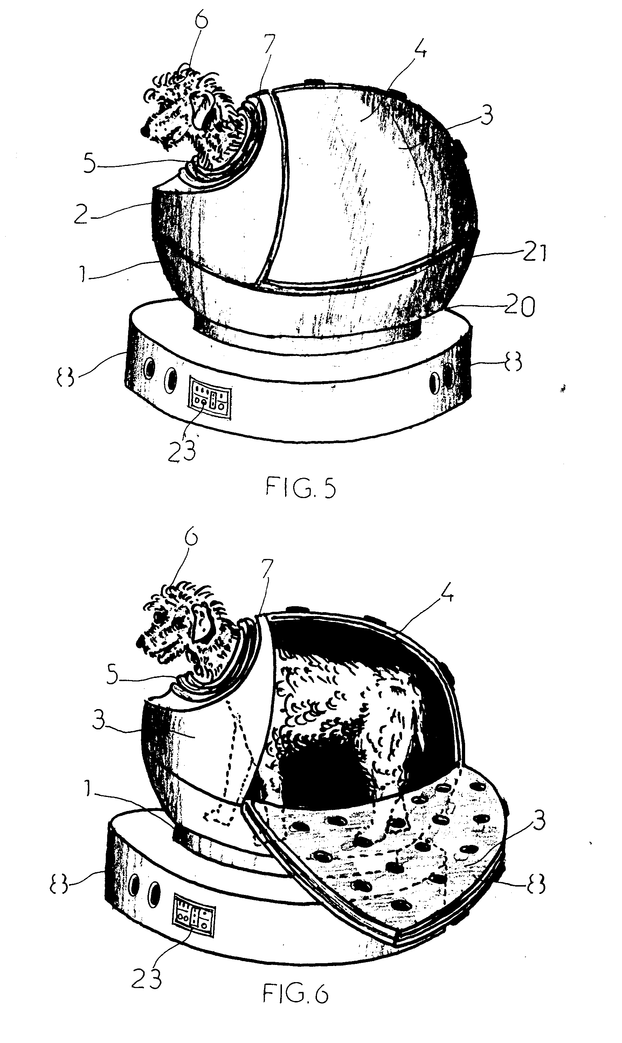

Comme cela est représenté sur la figure 5, la circulation d'air pulsé par le moteur 9 se fait à l'intérieur des doubles parois 17 extérieure et 18 intérieure. La paroi intérieure 18 est pourvue d'orifices ou de buses 15.

Ces orifices ou buses 15 sont disposés au-dessus et au-dessous du niveau de liquide 19.

Le produit liquide est de l'eau à laquelle peut être joints divers adjuvants liquides ou pulvérulents selon les phases du procédé de nettoyage (nettoyage-rinçage-séchage).

Comme représenté sur les figures, le niveau de liquide 19 du bain bouillonnant arrive au niveau du bord inférieur de l'orifice 5 prévu pour laisser sortir la tête 6 de l'animal.

Le caisson ou coffre technique 8 reçoit donc l'enceinte ou caisson étanche 4 qui est composé d'un socle de base 1 qui a une forme de vasque sur lequel sont montés deux panneaux amovibles 2 et 3 qui forment la partie restante qui termine l'enceinte ou caisson étanche 4.

Les panneaux 2 et 3 ainsi que le socle de base 1 forment une enceinte ou caisson étanche, l'ensemble ayant une forme arrondie ovoïde ; seule la partie 20, en contact avec le caisson ou coffre technique 8 est plane, de manière à faciliter l'appui au sol des pattes de l'animal, tout le restant de la paroi interne 18 de l'enceinte 4 est arrondie (sphérique ou cylindrique) de manière à faciliter le brassage du liquide par les jets d'air. Ce brassage provoque des projections qui sont elles-mêmes renvoyées dans différents sens du fait de ses différentes parois arrondies.

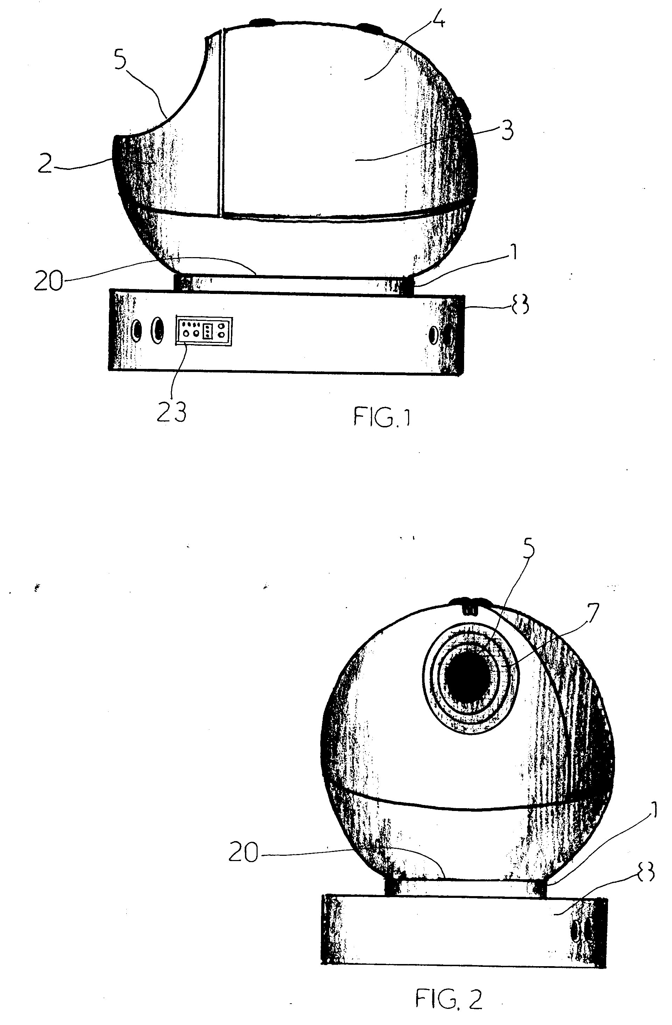

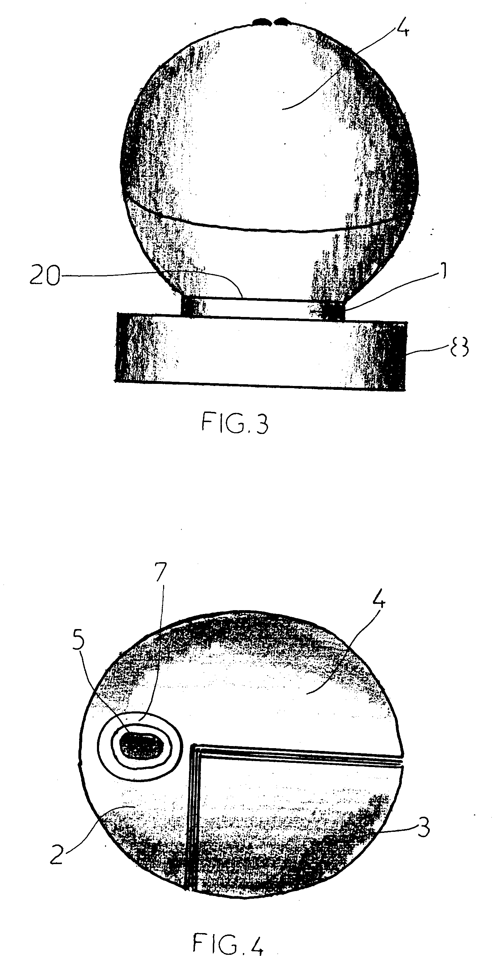

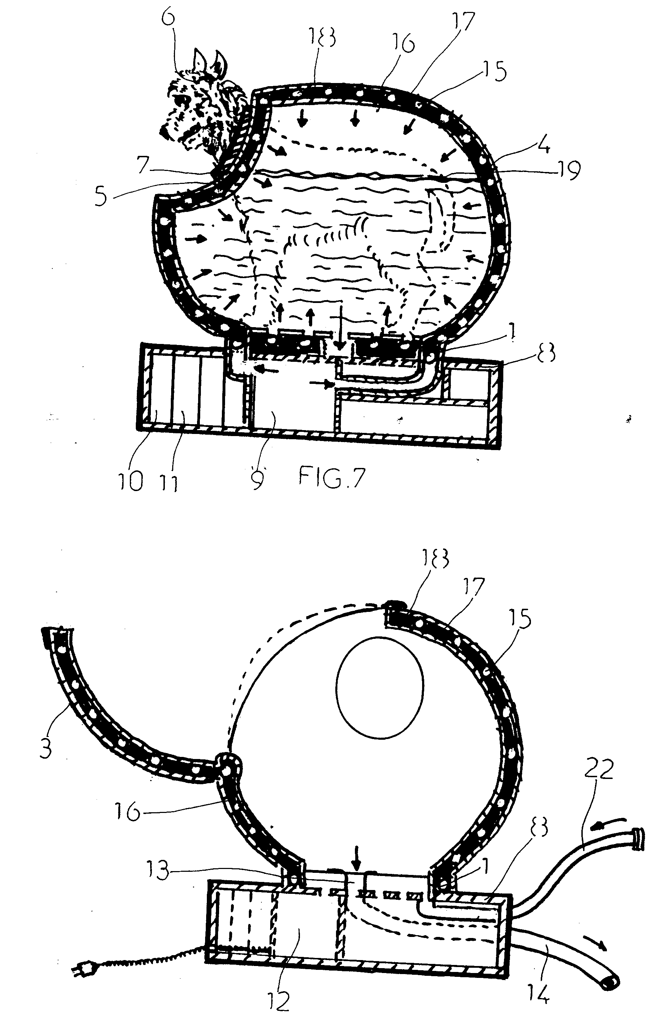

Une paroi ou panneau longitudinal 2 est fixé sur le socle 1, tandis que l'autre paroi ou panneau complémentaire 3 est articulé longitudinalement selon l'axe 21 pour faire office de porte à ladite enceinte 4. Selon le mode de réalisation représenté sur les figures 1, 2, 3, 4, 5, 6, 7 et 8, l'enceinte étanche 4 est composée du socle de base, d'un panneau fixe 2 solidaire dudit socle de base et d'un panneau 3 qui fait office de porte. Dans ce mode de réalisation, le panneau 2 forme la plus grande partie de la paroi de l'enceinte, il comprend l'orifice 5 pour le passage de la tête 6 de l'animal sur la partie avant de l'enceinte.

Le fonctionnement de l'appareil est le suivant :

L'utilisateur place l'animal dans l'enceinte ou caisson étanche 4 en ouvrant le panneau articulé 3 qui fait office de porte. La fermeture de ce panneau permet une parfaite étanchéité dudit caisson ou enceinte étanche 4, y compris tout autour du cou de l'animal qui passe la tête à travers l'orifice 5.

L'étanchéité est assurée à l'aide des membranes caoutchoutées réglables 7.

Un sangle, non représentée sur les dessins, peut être utilisée afin que l'animal reste debout et/ou soit immobilisé pendant les différentes phases de fonctionnement.

### LAVAGE :

L'utilisateur actionne l'ouverture de l'arrivée d'eau qui permet le remplissage de l'enceinte, de manière à ce que l'animal soit immergé environ deux tiers du volume de l'enceinte. A l'eau est ajouté un produit lavant 11 mais non moussant.

Un moteur 9 est actionné pour mettre en oeuvre le dispositif de projection de l'air. Ce moteur est une soufflerie qui propulse l'air au travers des doubles parois 17 et 18 de l'enceinte 4.

Le lavage, selon cet appareil, est assuré par le brassage de l'eau et des poils de l'animal dans tous les sens à l'intérieur de l'enceinte 4 grâce à l'air pulsé dans l'eau et au dessous de l'eau ; de plus, les formes arrondies de ladite enceinte 4 favorisent le renvoi de l'eau qui est agitée.

Les poils de l'animal sont donc agités et déplacés dans tous les sens en même temps que le nettoyage est assuré.

Selon l'état de la technique, il n'y a pas de nettoyage dans tous les sens des poils de l'animal, il y a simplement une projection régulière à partir des jets d'eau.

Cette première phase de nettoyage, selon l'appareil, a pour effet de masser l'animal, ce qui tend à calmer l'animal et à le détendre.

Quant à l'air pulsé, il est chauffé à environ 32°, ce qui permet à l'animal de rester, durant cette phase, dans un environnement très agréable, puisque que l'espace, au-dessus du niveau de l'eau 19, est à une température idéale pour assurer un meilleur confort à l'animal.

Cette première phase peut varier environ de quatre à six minutes suivant l'animal et/ou la texture de son poil.

Ledit appareil peut, bien entendu, comporter un programmateur 23.

### RINCAGE :

L'évacuation de l'eau usée se fait automatiquement en fin de phase de nettoyage.

Le rinçage est effectué par une diffusion d'air, une fois que le bain a été remplacé par de l'eau propre et que l'animal se trouve au deux tiers immergé.

Dès que l'eau usée est entièrement évacuée, un second cycle de rinçage est réalisé.

Cette phase de rinçage peut varier de trois à quatre minutes.

Un produit adjuvant, tel qu'un démêlant, peut être ajouté de même qu'un désinfectant au moment du second rinçage.

### SECHAGE :

Après que l'eau de rinçage ait été automatiquement évacuée, le séchage est effectué en actionnant le dispositif de propulsion d'air chauffé, c'est toujours le même moteur 9 qui envoie de l'air pulsé chauffé dans l'enceinte étanche 4 au travers des alvéoles ou buses 15.

De même, il est possible d'ajouter des produits adjuvants parfumant ou désinfectant à l'air pulsé, dans cette phase de séchage.

### REFERENCES

1. Socle de base
2.3. Panneaux
4. Enceinte ou caisson étanche
5. Orifice
6. Tête
7. Moyens d'étanchéité
8. Coffre technique
9. Moteur
10. Produits de rinçage
11. Produit de lavage
12. Dispositif d'alimentation électrique
13. Siphon
14. tuyau d'évacuation des eaux usées
15. Buses ou orifices
16. Surface intérieure de l'enceinte
17. Double paroi extérieure
18. Double paroi intérieure
19. Niveau de liquide
20. Partie
21. Axe
22. Tuyau d'alimentation de liquide
23. Programmateur

## Revendications

1. Appareil permettant le nettoyage ou le traitement externe des animaux du type chiens réalisé à partir d'un socle de base (1) qui peut recevoir un ou plusieurs panneaux amovibles (2,3) de manière à former une enceinte ou caisson étanche (4) à l'exception d'un orifice (5) permettant de laisser passer la tête (6) de l'animal ; des moyens d'étanchéité (7) assure l'étanchéité entre la tête (6) et l'orifice (5) ; un dispositif de projection assure la diffusion de fluides divers et leur évacuation caractérisé par le fait
que l'enceinte étanche (4) est pourvue d'une arrivée de liquide (22) qui permet d'immerger partiellement l'animal dans un demi-bain de liquide,
que le dispositif de projection projette de l'air sous pression par des buses (15) disposées sur toute la surface intérieure (16) de l'enceinte (4) de manière à assurer un brassage et un barbotage du liquide et des poils,
que l'enceinte est réalisée avec des formes arrondies pour assurer une projection du liquide et de l'air dans tous les sens.

2. Appareil selon la revendication 1 caractérisé par le fait que le dispositif de projection est assuré par un moteur électrique (9) alimenté sur secteur et/ou batterie qui assure la soufflerie de l'air pulsé au travers des buses (15), prévues à cet effet, sur toute la surface intérieure (16) de la paroi (18) du caisson ou enceinte étanche (4).

3. Appareil selon la revendication 2 caractérisé par le fait
que l'air est pulsé au travers des doubles parois (17,18) de l'enceinte qui comportent, sur toute la face intérieure de la paroi intérieure (16), des orifices ou buses (15) au-dessus ou au-dessous du niveau de liquide du bain (19).

4. Appareil selon la revendication 1 caractérisé par le fait que l'air pulsé est chauffé à une température d'environ 32°.

5. Appareil selon la revendication 1 caractérisé par le fait
que le niveau de liquide du bain bouillonnant arrive au niveau du bord inférieur de l'orifice (5) prévu pour laisser sortir la tête (6) de l'animal.

6. Appareil selon la revendication 1 caractérisé par le fait
que l'enceinte étanche (4) est disposée sur un coffre technique (8) qui loge l'alimentation électrique (12), le moteur (9) de propulsion du fluide à travers les doubles parois (17,18) de l'enceinte (4), les réserves de produits adjuvants (10,11), les raccords, tuyaux d'arrivée (22) et d'évacuation (14) des eaux usées.

7. Appareil selon la revendication 6 caractérisé par le fait
que le coffre technique (8) et l'enceinte étanche (4) sont indépendants l'un de l'autre ; le coffre technique (8) peut ainsi recevoir des enceintes étanches de tailles différentes.

8. Appareil selon la revendication 6 caractérisé par le fait
que ledit caisson technique (8) reçoit un socle de base (1) qui a une forme de vasque sur lequel est monté un ou plusieurs panneaux amovibles (2,3) qui forme la partie restante qui termine l'enceinte étanche.

9. Appareil selon la revendication 6 caractérisé par le fait
que les panneaux (2,3) et le socle de base (1) forment une enceinte ayant une forme arrondie ovoïde, seule la partie en contact avec la base est plane, de manière à faciliter l'appui au sol des pattes de l'animal, tout le restant de la paroi interne (18) de l'enceinte est arrondie de manière à faciliter le brassage du liquide et/ou des poils par les jets d'air.

10. Appareil selon la revendication 6 caractérisé par le fait
que l'enceinte étanche (4) est réalisée par une paroi ou panneau longitudinal (2) qui est fixé sur le socle de base (1), tandis que l'autre paroi ou panneau complémentaire (3) est articulé pour faire office de porte et par le socle de base (1) qui est en forme de vasque.
